# EUROPÄISCHE PATENTANMELDUNG

(11) **EP 4 249 176 A1**
(43) Veröffentlichungstag der Anmeldung: **27.09.2023**
(21) Anmeldenummer: 22163471.0
(22) Anmeldetag: 22.03.2022
(51) Int. Cl.: B25J 9/16, G05B 19/418, B65G 43/08

(54) **VERFAHREN ZUM HANDHABEN VON WAREN SOWIE HANDHABUNGSSYSTEM, INSBESONDERE KOMMISSIONIERSYSTEM**

(71) Anmelder: KNAPP Systemintegration GmbH, 8700 Leoben (AT)
(72) Erfinder: Bouwman, Marinus, 8700 Leoben (AT)
(74) Vertreter: Wirnsberger & Lerchbaum Patentanwälte OG

(57) **Zusammenfassung**

Die Erfindung betrifft ein Verfahren zum Handhaben von Waren mit einem Handhabungssystem, insbesondere zum Kommissionieren von Waren (2) mit einem Kommissioniersystem (1), wobei Waren (2) aus einem Lager entnommen und auf einem Zielladungsträger positioniert werden, wobei die Waren (2) mit einem Roboter und/oder einem Fördersystem vom Lager auf den Zielladungsträger bewegt werden. Um eine besonders hohe Effizienz und gleichzeitig eine geringe Fehlerrate zu erreichen, ist erfindungsgemäß vorgesehen, dass Eigenschaften der Waren (2), insbesondere eine Festigkeit, eine Steifigkeit, ein Gewicht, eine Oberflächenbeschaffenheit und/oder ein Schwerpunkt, erfasst werden und anhand von Daten eines Betriebes des Handhabungssystems (1), insbesondere Daten in Bezug auf Fehler bei Bewegungen der Waren (2), Randbedingungen bestimmt werden, bis zu welchen eine Funktion des Roboters und/oder des Fördersystems abhängig von Eigenschaften der Waren (2) gewährleistet ist, wonach ein Betrieb des Handhabungssystems (1) abhängig von erfassten Eigenschaften der Waren (2) angepasst wird, insbesondere durch Anpassung von Kräften und/oder Beschleunigungen, welche durch den Roboter und/oder das Fördersystem auf die Waren (2) aufgebracht werden.

Weiter betrifft die Erfindung ein Handhabungssystem, insbesondere ein Kommissioniersystem (1), mit welchem Waren (2) von einem Lager auf einen Zielladungsträger bewegt werden können mit einem Fördersystem und/oder einem Roboter.

## Beschreibung

Die Erfindung betrifft ein Verfahren zum Handhaben von Waren mit einem Handhabungssystem, insbesondere zum Kommissionieren von Waren mit einem Kommissioniersystem, wobei Waren aus einem Lager entnommen und auf einem Zielladungsträger positioniert werden, wobei die Waren mit einem Roboter und/oder einem Fördersystem vom Lager auf den Zielladungsträger bewegt werden.

Weiter betrifft die Erfindung ein Handhabungssystem, insbesondere ein Kommissioniersystem, mit welchem Waren von einem Lager auf einen Zielladungsträger bewegt werden können mit einem Fördersystem und/oder einem Roboter.

Verfahren der eingangs genannten Art sowie entsprechende Handhabungssysteme, welche häufig als Kommissioniersysteme ausgebildet sind, sind aus dem Stand der Technik hinlänglich bekannt geworden. Üblicherweise werden dabei Waren aus einem Lager automatisiert entnommen, mit einem Fördersystem zu einem Zielladungsträger wie beispielsweise einer Palette bewegt, wonach die Waren vom Fördersystem mit einem Roboter oder dergleichen auf den Zielladungsträger bewegt und auf diesem entsprechend einem Packbild gestapelt werden. Derartige Anlagen und Verfahren sind beispielsweise aus dem Dokument WO 2018/153717 A2 bekannt geworden.

Allerdings wird bei derartigen Verfahren häufig nur eine geringe Effizienz erreicht und haben sich derartige Verfahren und Systeme des Standes der Technik gleichzeitig als fehleranfällig erwiesen, und zwar insbesondere dann, wenn handzuhabende Waren beispielsweise unerwartete Eigenschaften aufweisen, was insbesondere aufgrund von herstellerseitigen Änderungen in Bezug auf die Verpackung häufig der Fall und gleichzeitig nicht über eine Änderung des Barcodes erfassbar ist.

Hier setzt die Erfindung an. Aufgabe der Erfindung ist es, ein Verfahren der eingangs genannten Art anzugeben, welches besonders effizient ist.

Darüber hinaus soll ein Handhabungssystem angegeben werden, mit welchem ein besonders effizientes Verfahren zur Handhabung von Waren, insbesondere ein effizientes Kommissionieren, möglich ist.

Die erste Aufgabe wird erfindungsgemäß durch ein Verfahren der eingangs genannten Art gelöst, bei welchem Eigenschaften der Waren, insbesondere eine Festigkeit, eine Steifigkeit, ein Gewicht, eine Oberflächenbeschaffenheit und/oder ein Schwerpunkt, erfasst werden und anhand von Daten eines Betriebes des Handhabungssystems, insbesondere Daten in Bezug auf Fehler bei Bewegungen der Waren, Randbedingungen bestimmt werden, bis zu welchen eine Funktion des Roboters und/oder des Fördersystems abhängig von Eigenschaften der Waren gewährleistet ist, wonach ein Betrieb des Handhabungssystems abhängig von erfassten Eigenschaften der Waren angepasst wird, insbesondere durch Anpassung von Kräften und/oder Beschleunigungen, welche durch den Roboter und/oder das Fördersystem auf die Waren aufgebracht werden.

Im Rahmen der Erfindung wurde erkannt, dass herkömmliche Verfahren insbesondere deshalb ineffizient sind, weil bei diesen in aller Regel sämtliche Waren mit gleichen Geschwindigkeiten und Kräften gehandhabt werden, wobei Geschwindigkeiten und Kräfte natürlich derart gewählt werden, dass sämtliche mit dem Handhabungssystem kommissionierten Waren zuverlässig gehandhabt werden können. Eine Geschwindigkeit eines Transportes der Waren von einem Wareneingang zu einem Lager, vom Lager zu einem Warenausgang bzw. eine Geschwindigkeit der Kommissionierung entspricht somit jener Geschwindigkeit, mit welcher auch die am ungünstigsten handzuhabenden Waren gehandhabt werden können, obwohl ein sehr großer Teil der Waren mit höheren Geschwindigkeiten gehandhabt werden könnte. Beispielsweise können Waren mit einem niedrigen Schwerpunkt schneller um eine Kurve auf dem Fördersystem bewegt werden als Waren, welche bei gleicher Grundfläche einen höheren Schwerpunkt aufweisen, da die Waren mit höherem Schwerpunkt leichter kippen könnten.

Im Rahmen der Erfindung wurde nun erkannt, dass bei Kenntnis verschiedenster Eigenschaften der Waren, insbesondere in Bezug auf mechanische Eigenschaften wie ein Gewicht, einen Schwerpunkt, ein Flächenträgheitsmoment, eine Steifigkeit, eine Festigkeit, eine Oberflächenbeschaffenheit, einen Haftreibungskoeffizienten bei einer Werkstoffpaarung mit beispielsweise einem Werkstoff eines Greifers eines Roboters und ähnliche Eigenschaften, einzelne Elemente des Handhabungssystems wie ein Roboter und das Fördersystem abgestimmt auf diese Eigenschaften angesteuert werden können, um bei jeder einzelnen Ware eine physikalisch maximal mögliche Geschwindigkeit zu gewährleisten und/oder einzelne Einrichtungen des Handhabungssystems wie den Roboter und/oder das Fördersystem gezielt nur dann drosseln zu können, wenn Waren vom Lager zum Zielladungsträger zu bewegen sind, welche andernfalls zu einem Fehler im System führen würden. Als Fehler im Handhabungssystemsystem bzw. im Verfahren bei welchem Waren gehandhabt werden, wird beispielsweise angesehen, wenn eine Ware nicht plangemäß von einem Wareneingang in das Lager und/oder nicht plangemäß vom Lager auf den Zielladungsträger bewegt werden kann, beispielsweise weil diese vom Fördersystem fällt, insbesondere aufgrund einer zu hohen Querbeschleunigung durch Kippen von einem Förderband fällt, nicht plangemäß von einem Greifer gegriffen werden kann oder bei einem Absetzen auf einer unterhalb angeordneten Ware oder einem Packmittel wie beispielsweise einer Palette eine Beschädigung verursacht.

Analoges gilt auch in Bezug auf eine Genauigkeit einer Handhabung bzw. eine Präzision von Bewegungen. Beispielsweise kann durch gezieltes Ausnutzen von Gleiteigenschaften von Waren auf bestimmten Oberflächen, insbesondere auf Oberflächen anderer Waren, eine sehr genaue Positionierung von Waren auf einem Zielladungsträger bzw. in Positionen gemäß einem Packbild auch mit vergleichsweise schnellen Bewegungen erreicht werden. Beispielsweise können die Waren somit von einem Greifer gezielt losgelassen werden, während die Waren noch eine horizontale Geschwindigkeit aufweisen, um in die vordefinierten Positionen zu gelangen, wenn die relevanten mechanischen Eigenschaften bekannt sind.

Somit kann beispielsweise mittels einer Kamera erfasst werden, wie weit eine bestimmte Ware, die mit einer bekannten Geschwindigkeitskomponente in horizontaler Richtung auf einer anderen Ware bzw. einer anderen Oberfläche wie einem Zielladungsträger abgesetzt wird, noch auf der anderen Ware bzw. dem Zielladungsträger gleitet, um Gleiteigenschaften zu bestimmen, welche für spätere Bewegungen ähnlicher Waren bzw. ähnlicher Materialpaarungen in Bezug auf einen Gleitreibungskoeffizienten genutzt werden können. Änderungen von Oberflächenbeschaffenheiten können dann natürlich bei laufender Überwachung von Positioniervorgängen einfach erkannt werden.

Eine besonders hohe Packdichte, welche ebenfalls zu einem effizienteren Verfahren führt, kann darüber hinaus erreicht werden, wenn Abmessungen der Waren, eine Belastbarkeit, eine Belastung, ein maximal möglicher Überstand, minimale Auflageflächen und dergleichen bekannt sind und bei der Berechnung des Packbildes und Handhabung der Waren berücksichtigt werden.

Eigenschaften, die im Rahmen des Verfahrens erfasst werden, um Randbedingungen für die Anlage zu ermitteln, können verschiedenste mechanische, optische, elektrische und magnetische Eigenschaften der Waren sein, welche automatisiert oder manuell erfasst werden können. Beispielsweise kann vorgesehen sein, dass ein gesamtes Lichtspektrum um die Waren erfasst wird, Aggregatzustände der Waren bei unterschiedlichsten Temperaturen sowie Masseneigenschaften, Dimensionen und deren Veränderungen und Temperaturen der Waren ermittelt werden. Darüber hinaus kann auch vorgesehen sein, dass Gradienten, Momente sowie ein Verhalten der Waren in linearen oder nicht linearen Bewegungsabläufen bestimmt werden. Ferner können Einrichtungen zur Erfassung von Geräuschemission oder -immission, also von Schall im gesamten Spektrum vorgesehen sein. Weitere Eigenschaften, die im Rahmen des Verfahrens erfasst werden können, können ein magnetisches Verhalten der Waren, Veränderungen des elektrischen Feldes oder Magnetfeldes der Waren sein. Darüber hinaus können auch Veränderungen eines elektrischen oder magnetischen Feldes durch die Bewegung der Waren in diesem Feld als Eigenschaften der Waren erfasst werden. Das Verfahren kann auch dazu genutzt werden, ein möglichst vollständiges physikalisches, insbesondere mechanisches, Modell der Waren und des Handhabungssystems zu erstellen, um Greifstrategien und/oder Transportstrategien, insbesondere Kommissionierstrategien, simulieren und verschiedene Verfahren rechnerisch vergleichen zu können, wonach eine optimale Strategie gewählt und umgesetzt wird.

Bevorzugt werden die Daten in Bezug auf Eigenschaften der Waren mit dem Handhabungssystem, welches als Kommissioniersystem ausgebildet sein kann, erfasst, insbesondere während eines Transportes der Waren von einem Wareneingang in ein Lager und/oder vom Lager zu einem Warenausgang. Das Handhabungssystem weist somit bevorzugt einen Wareneingang, ein Lager, welches mit dem Wareneingang verbunden ist, und einen Warenausgang auf, wobei auch der Warenausgang mit dem Lager verbunden ist. Das Handhabungssystem ist bevorzugt dazu eingerichtet, gezielt Waren aus dem Lager zu entnehmen und auf einen im Warenausgang positionierten Zielladungsträger zu bewegen, insbesondere vollständig automatisiert, wobei die Waren am Zielladungsträger gemäß einem Packbild angeordnet werden.

In die Berechnung des Packbildes können die mit dem erfindungsgemäßen Verfahren erfassten Eigenschaften der Waren natürlich ebenfalls eingehen, insbesondere Eigenschaften in Bezug auf eine Belastbarkeit der Waren, eine erforderliche Aufstandsfläche und/oder eine Belastung, welche die Waren auf eine darunter angeordnete Einrichtung ausüben, insbesondere eine Flächenbelastung.

Es kann jedoch auch vorgesehen sein, dass die Daten in Bezug auf Eigenschaften der Waren von außerhalb des Handhabungsystems bereitgestellt werden. Beispielsweise kann vorgesehen sein, dass Hersteller entsprechender Waren diese Daten bereitstellen, indem diese beispielsweise während einer Produktion der Waren erfasst werden. Auch diese Daten können genutzt werden, um zulässige Betriebsbedingungen von Einrichtungen des Handhabungsystems zu ermitteln und somit das Handhabungssystem näher an zulässigen Grenzen zu betreiben, wodurch eine erhöhte Effizienz erreicht wird.

Das Handhabungssystem, welches als Kommissioniersystem ausgebildet sein kann, dient somit einerseits dazu, entsprechende Eigenschaften zu erfassen. Hierzu können Einrichtungen zur Bestimmung bestimmter Eigenschaften der Waren im Handhabungssystem vorgesehen sein, insbesondere eine Waage, Einrichtungen zum Aufbringen einer vordefinierten Kraft und Erfassung einer durch die Kraft bewirkten Verformung, Einrichtungen zum Bestimmen eines Schwerpunktes, eines Flächenträgheitsmomentes, einer Gewichtsverteilung, einer Belastbarkeit und dergleichen. Darüber hinaus kann vorgesehen sein, dass bestimmte Eigenschaften der Waren alleine durch ein Verhalten der Waren während einer Bewegung vom Lager auf den Zielladungsträger erfasst werden, insbesondere durch entsprechend hochauflösende Kameras. So kann beispielsweise durch ein Kippverhalten einer Ware auf einem Förderband bei bekannter Geschwindigkeit bzw. Querbeschleunigung auf einen Schwerpunkt geschlossen werden. Wenn Waren mit einem bekannten Gewicht auf anderen Waren am Zielladungsträger abgesetzt werden und eine Verformung der unteren Waren erfasst wird, kann auf eine Steifigkeit dieser unteren Waren geschlossen werden.

Ergänzend zu einer teil- oder vollautomatisierten Erfassung von Eigenschaften der Waren kann auch vorgesehen sein, dass Eigenschaften manuell durch einen Bediener erfasst werden. Dieser kann beispielsweise mittels einer Software-Applikation zur Abarbeitung eines Fragenkataloges in Bezug auf einzelne Waren angeleitet werden, wobei beispielsweise eine Belastbarkeit oder eine benötigte Aufstandsfläche durch Einordnung der Waren in bestimmte Klassen erfasst wird. Die Software-Applikation kann natürlich mit einem Tablet- oder Handheld-Computer umgesetzt sein, sodass zur einfachen Einordnung der Waren in bestimmte Klassen visuelle Hilfen bereitgestellt sein können. Es kann daher vorteilhaft sein, wenn Eigenschaften der Waren manuell unter Einsatz eines Fragenkataloges bestimmt werden. Entsprechend ergibt sich eine wesentlich erhöhte Effizienz, wenn diese Eigenschaften der Waren gemessen werden, vorzugsweise kontinuierlich, und in die Steuerung des Verfahrens eingehen.

Gleichzeitig können auch Randbedingungen, bis zu welchen die einzelnen Einrichtungen des Handhabungssystems ordnungsgemäß funktionieren, automatisiert erfasst werden, indem eine fehlerlose Bewegung einer Ware vom Lager auf den Zielladungsträger bei bekannten Eigenschaften und bekannten Geschwindigkeiten und Kräften der einzelnen Einrichtungen dazu genutzt wird, diese Eigenschaften der Waren den einzelnen Einrichtungen als zulässige Eigenschaften bei den gewählten Geschwindigkeiten und Kräften zuzuordnen, sodass mit zunehmender Betriebsdauer zunehmend Daten in Bezug auf zulässige Betriebsbedingungen der einzelnen Einrichtungen des Handhabungssystems ermittelt werden. Analog werden durch auftretende Fehler, welche in der Regel durch Sensoren automatisiert erkannt werden, unzulässige Betriebsbedingungen der einzelnen Einrichtungen wie von Förderbändern und Robotern ermittelt.

Es ist daher bevorzugt vorgesehen, dass Randbedingungen von Einrichtungen des Handhabungssystems, insbesondere Randbedingungen des Roboters und/oder des Fördersystems, bestimmt werden, indem Daten in Bezug auf zulässige Betriebsbedingungen und unzulässige Betriebsbedingungen aus fehlerfreien und fehlerbehafteten Bewegungen von Waren vom Lager auf den Zielladungsträger ermittelt werden. So kann als zulässige Randbedingung beispielsweise eine bestimmte Geschwindigkeit angesehen werden, bis zu welcher eine Ware mit bekanntem Schwerpunkt, bekannter Grundfläche und bekannten Oberflächeneigenschaften um eine Kurve einer bestimmten Förderstrecke bewegt werden kann, ohne zu kippen.

Somit werden durch das erfindungsgemäße Verfahren im Betrieb automatisiert Daten in Bezug auf zulässige und unzulässige Betriebsbedingungen bzw. Grenzen, bis zu welchen die einzelnen Einrichtungen abhängig von verschiedensten Eigenschaften der Waren ordnungsgemäß funktionieren, gesammelt. Diese Daten erlauben wiederum Rückschlüsse darauf, mit welchen maximalen Geschwindigkeiten und Kräften andere Produkte durch diese Einrichtungen gehandhabt werden können, sodass ein Betrieb des Handhabungssystems abhängig von Eigenschaften der einzelnen Waren optimiert werden kann.

Die Eigenschaften der Waren, welche im Verfahren erfasst werden und relevant für eine effiziente Handhabung sind, können natürlich auch ein Zusammenspiel von einzelnen Waren betreffen. Beispielsweise kann in der Datenbank vermerkt werden, dass eine erste Ware wie beispielsweise eine Milchpackung gut und stabil auf einer bestimmten zweiten Warenart wie einer Bierkiste angeordnet werden kann, dies jedoch umgekehrt nicht möglich ist bzw. zu einem instabilen Packbild führt. Somit werden nicht nur Daten in Bezug auf bestimmte Eigenschaften der einzelnen Waren ermittelt, sondern auch Daten in Bezug auf Wechselwirkungen zwischen den Waren. Diese Daten können natürlich auch dazu genutzt werden, um Rechenmodelle zu überprüfen, mit welchen diese Wechselwirkungen zwischen den Waren basierend auf Eigenschaften der einzelnen Waren berechnet werden können, insbesondere durch Finite-Elemente-Verfahren oder Mehrkörpersimulationen. Somit können mit zunehmender Betriebsdauer auch Daten in Bezug darauf gesammelt werden, welche Waren auf welchen anderen Waren abgelegt werden können, ohne dass Waren kippen oder zu Bruch gehen. Entsprechendes gilt natürlich auch in Bezug auf weitere Wechselwirkungen zwischen Waren, beispielsweise einen Wärmeübergang von einer Ware auf eine andere, Reibungskoeffizienten, die sich durch Werkstoffpaarungen von Verpackungen zweier Waren ergeben, und dergleichen, soweit diese Eigenschaften für ein Handhaben, insbesondere ein Kommissionieren, der Waren relevant sind.

Es ist daher bevorzugt vorgesehen, dass Eigenschaften der Waren bestimmt werden, welche ein Zusammenwirken der Waren mit anderen Waren betreffen, um ein besonders effizientes Verfahren zu erreichen.

Die Erfassung der Eigenschaften der Waren kann auf verschiedenste Weisen erfolgen. Ein besonders effizientes Verfahren ergibt sich, wenn Eigenschaften der Waren durch Aufbringung definierter Beschleunigungen mit dem Fördersystem und Erfassung von Verformungen der Waren erfasst werden. So werden die Waren mit dem Fördersystem ohnedies zwangsläufig beschleunigt, um diese vom Lager zum Zielladungsträger zu bewegen, weswegen in diesem Fall keine zusätzlichen Einrichtungen erforderlich sind, beispielsweise um eine Steifigkeit der Waren zu erfassen.

Es hat sich als günstig erwiesen, dass ein Gewicht der Waren über das Fördersystem und/oder über den Roboter erfasst wird. Beispielsweise kann ein Roboter, mit welchem Waren angehoben und vom Fördersystem auf einen Zielladungsträger gehoben werden, mit einer Wägezelle, einem Kraft- bzw. Gewichtssensor ausgestattet sein, um ein Gewicht der aufgenommenen Waren erfassen zu können. Es kann dann auf eine zusätzliche Station im Handhabungssystem verzichtet werden, mit welchem ein Gewicht der Waren bestimmt wird.

Günstig ist es, wenn die Waren während einer Bewegung auf dem Fördersystem und/oder mit dem Roboter optisch, insbesondere mittels einer 3D-Kamera, einer Infrarotkamera und/oder einer UV-Kamera erfasst werden, wobei insbesondere Verformungen der Waren abhängig von Beschleunigungen der Waren bestimmt werden. Basierend auf den gemessenen Verformungen der Waren bei bekannten Beschleunigungen, welche beispielsweise mittels des Fördersystems aufgebracht werden, oder bekannten Kräften, welche beispielsweise mit einem Roboter oder einem Greifer aufgebracht werden, kann automatisiert ein mechanisches Modell der einzelnen Waren erstellt werden, woraus beispielsweise ableitbar sein kann, mit welcher Geschwindigkeit eine Ware auf einem Förderband durch eine Kurve bewegt werden kann, bevor die Ware kippt oder dergleichen, um ein entsprechendes Förderband bei einer identen Ware optimal an Eigenschaften der Ware angepasst ansteuern zu können.

Mittels einer Infrarotkamera ist es darüber hinaus möglich, Gegenstände innerhalb von zumindest einigen Verpackungen zu erfassen, sodass beispielsweise auf einen Füllgrad, eine Belastbarkeit, ein Kippverhalten oder dergleichen geschlossen werden kann, um wiederum ein Gewicht und/oder einen Schwerpunkt bestimmen zu können.

Eine besonders effektive Umsetzung des Verfahrens ergibt sich, wenn Eigenschaften von analysierten Waren genutzt werden, um das Fördersystem bei identen bzw. ähnlichen Waren gemäß den zuvor erfassten Eigenschaften anderer Waren ansteuern zu können. Eine Zuordnung der Eigenschaften zu den einzelnen Waren kann dabei über eine Inventarnummer oder einen Barcode, welcher auf die Waren aufgedruckt ist, sowie alternativ auch optische Merkmale der Waren erfolgen. Dies kann insbesondere dann zweckmäßig sein, wenn ein Hersteller einen Barcode unverändert beibehält, jedoch beispielsweise ein Verpackungsmaterial oder eine Artikelgröße ändert, wodurch relevante Eigenschaften für das Handhabungssystem, insbesondere ein Reibwert und eine Packungsgröße, beeinflusst werden. Entsprechend ist bevorzugt vorgesehen, dass Eigenschaften der Waren einem optischen Merkmal der Waren, insbesondere einem Barcode und/oder einer Verpackung der Waren zugeordnet und in einer Datenbank gespeichert werden. Die Datenbank kann dabei somit zu einem einzigen Barcode unterschiedliche Waren und entsprechend unterschiedliche Eigenschaften zugeordnet enthalten. Somit ermöglicht das erfindungsgemäße Verfahren eine wesentlich detailliertere Aufschlüsselung von Merkmalen einzelner Waren, als dies beispielsweise bei herkömmlichen Datenbanken über einen Barcode möglich ist, wobei in aller Regel herstellerabhängige Sonderaktionen, Rabatte oder dergleichen nicht berücksichtigt werden.

Beispielsweise kann ein Hersteller temporär bei einem Waschmittel im Rahmen einer Aktion eine um 20 % größere Verpackung vorsehen, wobei gleichzeitig der Barcode nicht geändert wird. Durch Erfassung optischer Merkmale der Waren und entsprechend zugeordneter mechanischer Eigenschaften kann jedoch diese Abweichung im erfindungsgemäßen Handhabungssystem erfasst werden. Somit können auch im entsprechenden Aktionszeitraum verfügbare Waren mit anderen Abmessungen, einem anderen Gewicht und gegebenenfalls einem anderen Verpackungsmaterial optimal gehandhabt werden. Bei herkömmlichen Verfahren, bei welchen Waren ausschließlich über den Barcode identifiziert werden, wäre dies nicht möglich, sodass im Aktionszeitraum abweichende Eigenschaften der Waren zu einem Fehler beispielsweise bei der Packbildbildung führen würden.

Eine besonders gute Erfassung mechanischer Eigenschaften ist im Fördersystem an Punkten möglich, an welchen Beschleunigungen in unterschiedliche Richtungen auf die einzelnen Waren aufgebracht werden. Entsprechend ist bevorzugt vorgesehen, dass mechanische Eigenschaften der Waren an Positionen im Fördersystem erfasst werden, an welchen eine Geschwindigkeitsänderung der Waren erfolgt, insbesondere in Positionen, an welchen die Waren in einer ersten Richtung abgebremst und in einer zweiten Richtung beschleunigt werden, wobei die zweite Richtung etwa normal zur ersten Richtung ist. Dies können beispielsweise Gurtumsetzer einer herkömmlichen Fördertechnik sein. Üblicherweise ist an den entsprechenden Positionen dann jeweils zumindest eine Kamera vorgesehen, mit welcher die mechanischen Eigenschaften bzw. Verformungen erfasst werden, welche durch die Beschleunigungen bedingt sind. Mechanische Eigenschaften werden somit bevorzugt an Positionen erfasst, an welchen die Waren in unterschiedliche Richtungen beschleunigt und/oder abgebremst werden. In der Regel erfolgt an entsprechenden Einrichtungen zunächst ein Abbremsen bzw. eine negative Beschleunigung entlang einer Richtung, in welcher die Waren bewegt werden, und anschließend eine Beschleunigung der Waren in einer zweiten Richtung, welche beispielsweise normal zur ersten Richtung sein kann.

Durch eine Erfassung von Verformungen und/oder Auslenkungen der Waren an Positionen, an welchen Beschleunigungen in unterschiedliche Richtungen auf die Waren wirken, können mechanische Eigenschaften besonders gut und gleichzeitig einfach erfasst werden.

Die Erfassung muss natürlich nicht zwingend an einer Position erfolgen, an welcher die Richtung der Geschwindigkeit der Ware um 90 Grad geändert wird. Vielmehr kann auch eine geringere Richtungsänderung, beispielsweise um 45 Grad, zur Bestimmung mechanischer Eigenschaften genutzt werden. Auch hier kann die auf die Ware wirkende Beschleunigung als zusammengesetzte Beschleunigung angesehen werden, welche eine Komponente parallel zur ursprünglichen Bewegungsrichtung und eine Komponente normal dazu aufweist.

Günstig ist es, wenn magnetische Eigenschaften der Waren während einer Bewegung der Waren vom Lager auf den Zielladungsträger erfasst werden. Auch diese Eigenschaften können sich als vorteilhaft erweisen, um eine besonders effiziente und gleichzeitig fehlerarme Kommissionierung zu gewährleisten.

Vorteilhaft ist es, wenn Eigenschaften der Waren, insbesondere Abmessungen, mit einem Radar erfasst werden, insbesondere während einer Bewegung der Waren vom Lager auf den Zielladungsträger. Es kann auch vorgesehen sein, dass an einem Lagereingang, an welchem die Waren beispielsweise mittels LKW angeliefert und in das Lager transportiert werden, eine entsprechende Station mit einem Radar vorgesehen ist, mit welchem Außenabmessungen der Waren besonders genau erfasst werden können. Diese Daten können anschließend für eine Lagerung sowie in weiterer Folge für eine Kommissionierung eingesetzt werden. In Verbindung mit Daten in Bezug auf eine Festigkeit und/oder Steifigkeit der Waren kann somit eine besonders effiziente und stabile Bildung eines Packbildes erfolgen. Weiter ist es damit auf einfache Weise möglich, günstige Greifpunkte an den Waren für eine Handhabung derselben mit einem Roboter zu bestimmen.

Abmessungen der Waren können grundsätzlich natürlich auch auf andere Weisen durch ein geeignetes Erfassungssystem wie beispielsweise eine Kamera oder einen Lichtvorhang erfasst werden.

Günstig ist es, wenn Eigenschaften der Waren und ermittelte Randbedingungen, bis zu welchen eine Funktion des Roboters und/oder des Fördersystems abhängig von Eigenschaften der Waren gewährleistet ist, in einer zentralen Datenbank gespeichert werden, welche mit mehreren Handhabungssystemen verbunden ist. Somit genügt es, wenn in einem ersten Handhabungssystem entsprechende Daten aufgenommen werden, um weitere Handhabungssysteme entsprechend ansteuern zu können.

Es kann somit ein Cloudspeicher bzw. eine zentrale Datenbank vorgesehen sein, welche mit mehreren Kommissioniersystemen verbunden ist, welche jeweils Daten in Bezug auf Eigenschaften der einzelnen Waren sammeln, welche Daten regelmäßig mit der zentralen Datenbank bzw. einem Datenspeicher einer zentralen Datenverarbeitungseinrichtung abgeglichen werden.

Es versteht sich, dass eine zentrale Datenverarbeitungseinrichtung nicht zwingend physisch gesondert von allen Handhabungssystemen positioniert sein muss, sondern auch in einem Handhabungssystem angeordnet sein kann. Weiter können auch die einzelnen Handhabungssysteme untereinander verbunden sein, sodass ein Datenaustausch nicht zwingend über die zentrale Datenverarbeitungseinrichtung erfolgen muss.

Besonders günstig ist, wenn ein Betrieb eines zweiten Handhabungssystems abhängig von mit dem zweiten Handhabungssystem erfassten Eigenschaften der Waren und in einem ersten Handhabungssystem erfassten Randbedingungen angepasst wird, insbesondere um eine Kommissionierleistung zu maximieren. Üblicherweise erfolgt dennoch kontinuierlich eine Überprüfung und Messung von Eigenschaften der einzelnen Waren, insbesondere von Größe, Gewicht, Schwerpunkt und dergleichen, um Abweichungen von gespeicherten Daten besonders rasch erfassen und das Handhabungssystem entsprechend angepasst betreiben zu können. So hat sich für Kommissioniersysteme als nachteilig gezeigt, dass Hersteller häufig ein Verpackungsmaterial ohne Rücksprache mit Logistikdienstleistern ändern, wodurch jedoch eine logistische Effizienz stark beeinflusst werden kann, beispielsweise weil für ein stabiles Greifen mit einem Greifer eine stärkere Greifkraft erforderlich ist oder das Verpackungsmaterial eine geringere Festigkeit aufweist, sodass dieses nicht mehr so belastbar wie bisher ist. Durch eine kontinuierliche Erfassung der Eigenschaften kann somit sehr rasch auf derartige Änderungen reagiert werden, wodurch eine hohe Effizienz und eine geringe Fehlerquote erzielt werden.

Die weitere Aufgabe wird durch ein Handhabungssystem der eingangs genannten Art gelöst, welches zur Erfassung von Eigenschaften der Waren wie einer Festigkeit, einer Steifigkeit, einem Gewicht und dergleichen sowie zur Bestimmung von Randbedingungen, bis zu welchen eine Funktion des Roboters und/oder des Fördersystems abhängig von Eigenschaften der Waren gewährleistet ist, eingerichtet ist, wobei das Handhabungssystem ferner dazu eingerichtet ist, abhängig von Eigenschaften der Waren einen Betrieb des Handhabungssystems anzupassen, insbesondere durch Anpassung von Kräften und/oder Beschleunigungen, welche durch den Roboter und/oder das Fördersystem auf die Waren aufgebracht werden, wobei das Handhabungssystem insbesondere zur Durchführung eines erfindungsgemäßen Verfahrens eingerichtet ist.

Das entsprechende Handhabungssystem ist somit in der Regel dazu eingerichtet, das Fördersystem und den Roboter abhängig von den tatsächlichen Eigenschaften der einzelnen Waren zu betätigen, um eine besonders hohe Effizienz zu erreichen. Eine besonders hohe Effizienz wird üblicherweise auch dadurch erreicht, dass bei einer Handhabung von Waren, Eigenschaften anderer Waren berücksichtigt werden, welche mit den gerade gehandhabten Waren zusammenwirken, beispielsweise indem diese als Auflage für andere Waren dienen.

Üblicherweise ist eine Kamera, insbesondere eine 3D-Kamera, eine Infrarotkamera und/oder eine UV-Kamera vorgesehen, mit welchen eine Bewegung der Waren während einer Bewegung der Waren auf dem Fördersystem erfassbar ist.

Durch eine entsprechende Kamera kann in Verbindung mit einer Datenverarbeitungseinrichtung automatisiert ein mechanisches Modell der einzelnen Waren erstellt werden, insbesondere durch finite Elementmodellierung, um anhand dieses mechanischen Modelles auf maximale Beschleunigungen der Waren schließen zu können.

Weiter können visuelle bzw. mit einer Kamera aufgenommene Daten dazu genutzt werden, auf ein Verpackungsmaterial zu schließen und Produktänderungen rasch zu erfassen. Beispielsweise kann vorgesehen sein, dass in einer Datenbank ein optisches und/oder mechanisches 3D-Modell der einzelnen Waren angelegt ist, welches Modell regelmäßig mit neu ankommenden und durch die Kamera erfassten Waren verglichen wird, sodass bei Abweichungen einer optischen Erscheinung rasch geprüft werden kann, ob sich weitere Eigenschaften der Ware geändert haben, beispielsweise eine Größe, ein Gewicht und ein Reibwert einer Oberfläche.

Für eine Abschätzung eines Reibwertes einer Oberfläche können auch ein Reflexionsgrad der Oberfläche eingesetzt oder ein Vergleich einer mit der Kamera erfassten Oberfläche mit in einer Datenbank gespeicherten Abbildungen von Oberflächen mit bekannten Reibwerten genutzt werden. Insbesondere kann hierzu auch eine Mustererkennung bzw. maschinelles Lernen eingesetzt werden, um anhand von optisch erfassten Eigenschaften auf mechanische Eigenschaften der Waren zu schließen.

Alternativ oder ergänzend zu einer analytischen Bestimmung maximaler Beschleunigungen kann eine Bestimmung der Randbedingungen, bis zu welchen der Roboter und/oder das Fördersystem die Waren problemlos handhaben kann, auch dadurch erfolgen, dass diese Randbedingungen anhand von tatsächlichen Bewegungen ermittelt werden, wobei Fehler bei den einzelnen Bewegungen bzw. Greif- oder Kommissionierfehler berücksichtigt werden.

Günstig ist es, wenn das Fördersystem eine Richtungsänderungseinrichtung, insbesondere einen Gurtumsetzer, aufweist, mit welchem eine definierte Beschleunigung auf die am Fördersystem transportierten Waren in unterschiedlichen Richtungen aufbringbar ist, wobei vorzugsweise an der Richtungsänderungseinrichtung eine Kamera zur Erfassung von Verformungen oder Auslenkungen der Waren angeordnet ist. Diese Kamera kann wiederum mit einer Datenverarbeitungseinrichtung verbunden sein, mit welcher mechanische Eigenschaften der Waren anhand von Verformungen und den über den Gurtumsetzer aufgebrachten, bekannten Beschleunigungen bestimmt werden können.

Weiter kann es günstig sein, wenn ein Radar zur Erfassung von Abmessungen der Waren vorgesehen ist. Durch eine besonders genaue Erfassung von Abmessungen der Waren kann eine hohe Effizienz beim Kommissionieren und eine hohe Packbilddichte erreicht werden. Alternativ oder ergänzend können Abmessungen auch durch ein anderes geeignetes Erfassungssystem wie beispielsweise eine Kamera oder einen Lichtvorhang bestimmt werden.

Ein als Kommissioniersystem ausgebildetes Handhabungssystem kann beispielsweise ein Lager und eine Kommissionierstation umfassen, wobei die Kommissionierstation mit dem Lager durch ein Fördersystem wie beispielsweise ein Förderband oder einen Rollenförderer verbunden ist. Die Vorteile eines erfindungsgemäßen Verfahrens können besonders gut mit mehreren entsprechenden Kommissioniersystemen umgesetzt werden, zumal mit einem Kommissioniersystem erfasste Daten dann in einem weiteren Kommissioniersystem zur Steuerung eingesetzt werden können. Entsprechend ist es günstig, wenn zumindest zwei Handhabungssysteme, insbesondere Kommissioniersysteme, vorgesehen sind, welche erfindungsgemäß ausgebildet sind, wobei eine Datenverarbeitungseinrichtung vorgesehen ist, welche mit sämtlichen Handhabungssystemen verbunden ist, sodass ein Betrieb eines Handhabungssystems anhand von mit diesem Handhabungssystem erfassten Eigenschaften der Waren und mit einem anderen Handhabungssystem erfassten Randbedingungen des Roboters und/oder des Fördersystems angepasst werden kann.

Weitere Merkmale, Vorteile und Wirkungen der Erfindung ergeben sich anhand des nachfolgend dargestellten Ausführungsbeispiels. In den Zeichen, auf welche dabei Bezug genommen wird, zeigen:
Fig. 1 und 2 ein Detail eines erfindungsgemäßen Handhabungssystems in unterschiedlichen Ansichten;
Fig. 3 ein Zusammenwirken mehrerer Handhabungssysteme mit einem zentralen Datenspeicher.

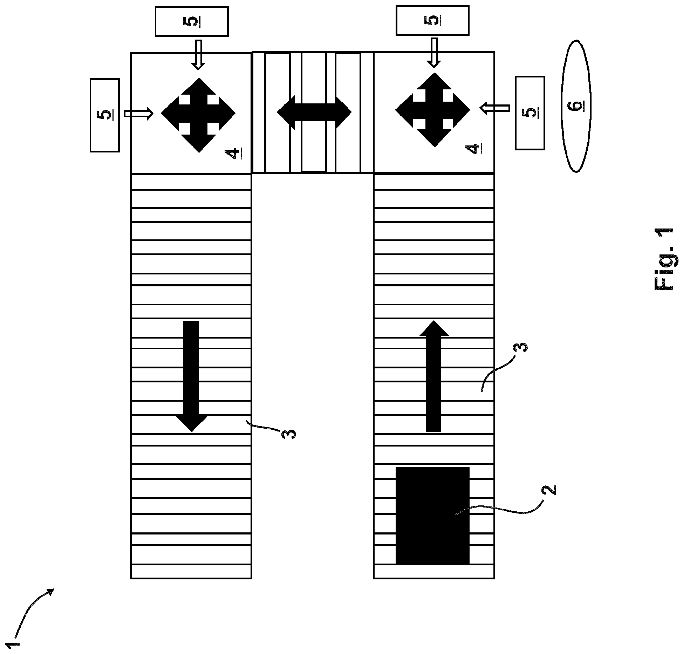

Fig. 1 zeigt eine Draufsicht auf ein Fördersystem eines erfindungsgemäßen Handhabungssystems, welches als Kommissioniersystem 1 ausgebildet ist. Wie hier ersichtlich wird ein Artikel von einem Lager über eine Förderstrecke 3 eines Fördersystems zu einem Kommissionierplatz gefördert, wobei eine Bewegungsrichtung der Waren 2 an einem Gurtumsetzer 4 um 90 Grad geändert wird. Entsprechend erfolgt am Gurtumsetzer 4 jeweils eine Verzögerung der Waren 2 in einer ersten Raumrichtung in einer Beschleunigung der Waren 2 in einer normal zur ersten Raumrichtung angeordneten zweiten Raumrichtung. An diesen Gurtumsetzern 4 sind Kameras 5 angeordnet, welche Verformungen der Waren 2 erfassen können. Im dargestellten Ausführungsbeispiel sind zwei Kameras 5 vorgesehen. Es versteht sich, dass auch mehr als zwei Kameras 5 vorgesehen sein können. Weiter ist es auch möglich, die Daten mit nur einer einzigen Kamera zu erfassen, welche beispielsweise als 3D-Kamera ausgebildet sein kann Über die Verformungen der Waren 2 kann auf mechanische Eigenschaften der Waren 2, insbesondere eine Steifigkeit, ein Gewicht und dergleichen geschlossen werden, welche Eigenschaften der Waren 2 beispielsweise dann den einzelnen Elementen des Fördersystems als zulässige Randbedingungen zugeordnet werden können, wenn die Waren 2 erfolgreich am Zielladungsträger positioniert werden, was üblicherweise ebenfalls automatisiert erfasst wird.

Es kann vorgesehen sein, dass eine Geschwindigkeit der Fördertechnik erhöht wird, bis einzelne Waren 2 nicht mehr erfolgreich zum Zielladungsträger bewegt werden können, beispielsweise weil die Waren 2 vom Fördersystem fallen und/oder kippen. In diesem Fall wäre somit ein Betriebszustand des Fördersystems bestimmt, welcher für die entsprechenden Eigenschaften der Waren 2 nicht mehr zulässig ist, sodass eine Randbedingung für das Fördersystem durch funktionierende und nicht mehr funktionierende Bewegungen vom Lager zum Zielladungsträger bestimmt wird.

Alternativ oder ergänzend kann auch vorgesehen sein, dass mittels der Kamera 5, bekannten Beschleunigungen, welche auf die Waren 2 am Gurtumsetzer 4 wirken, und gegebenenfalls weitere Einrichtungen, mit welchen mechanische, elektrische und/oder magnetische Eigenschaften der Waren 2 erfasst werden, ein mechanisches, elektrisches und/oder magnetisches Modell der Waren 2 automatisiert erstellt wird, welches Modell dazu eingesetzt wird, anhand bekannter physikalischer Grundsätze die Randbedingungen zu ermitteln, bis zu welchen Einrichtungen des Kommissioniersystems 1 wie Roboter und ein Fördersystem betätigt werden können, ohne dass Fehler beim Kommissionieren auftreten.

Ferner ist ein Messgerät 6 dargestellt. Dieses Messgerät 6 kann dazu genutzt werden, eine oder mehrere mechanische, optische, magnetische und/oder elektrische Eigenschaften der Waren 2 zu erfassen, um diese Eigenschaften insbesondere für eine Modellbildung und Ermittlung von Randbedingungen der Einrichtungen der Kommissionieranlage nutzen zu können.

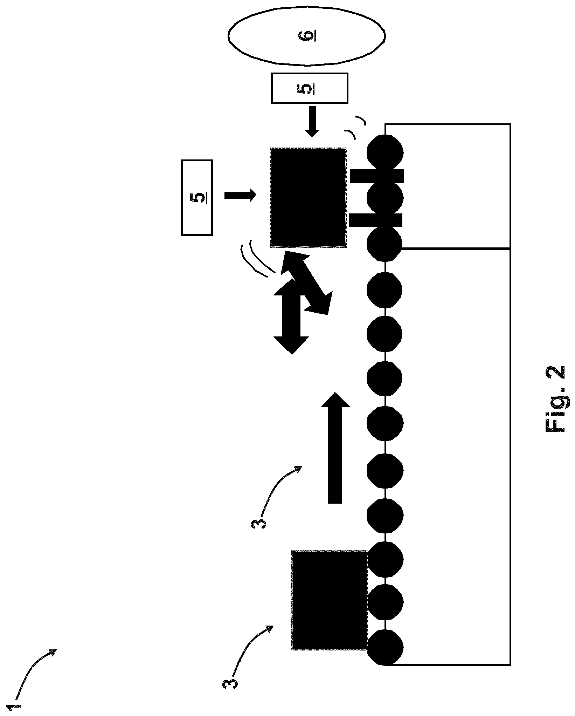

Fig. 2 zeigt eine Seitenansicht des Kommissioniersystems 1 der Fig. 1. Wie hier ersichtlich, können mehrere Kameras 5 am Gurtumsetzer 4 angeordnet sein, um ein möglichst genaues 3D-Abbild der Waren 2 zu ermitteln. Ergänzend können natürlich weitere aktive oder passive Sensoren wie beispielsweise Radarsensoren oder Infrarotkameras vorgesehen sein, um ein möglichst genaues Modell der einzelnen Waren 2 zu bestimmen.

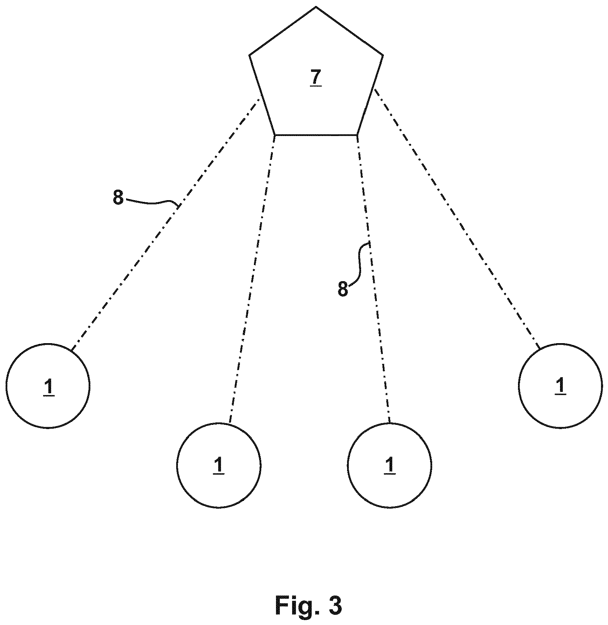

Fig. 3 zeigt ein Zusammenwirken mehrerer als Kommissioniersysteme 1 ausgebildeter Handhabungssystem mit einer zentralen Datenverarbeitungseinrichtung, welche einen Datenspeicher 7 aufweist. Die einzelnen Kommissioniersysteme 1 sind über Datenverbindungen 8 mit dem Datenspeicher 7, beispielsweise einem Cloud-Speicher, verbunden, sodass über den Datenspeicher 7 Daten in Bezug auf Eigenschaften der Waren 2 zwischen den Kommissioniersystemen 1 ausgetauscht werden können. Ändert somit beispielsweise ein Hersteller einer bestimmten Waren 2 Abmessungen oder Verpackungsmaterial einer Ware 2 kann dies mit einem Kommissioniersystem 1 erfasst und über den zentralen Datenspeicher 7 an die weiteren Kommissioniersysteme 1 weitergegeben werden, sodass Fehler durch Handhabungsparameter, welche auf die veralteten Eigenschaften der Ware 2 abgestimmt sind, in diesen Kommissioniersystemen 1 bereits vermieden werden können. Über die Datenverbindungen 8 erfolgt somit ein regelmäßiger Abgleich der Daten, welche mit den einzelnen Kommissioniersystemen 1 in Bezug auf Eigenschaften der Waren 2 erfasst werden, mit dem zentralen Datenspeicher 7.

Mit einem erfindungsgemäßen Verfahren sowie einem entsprechenden Kommissioniersystem 1 kann eine besonders hohe Effizienz beim Kommissionieren von Waren 2 aus einem Lager auf einen Zielladungsträger erreicht werden, weil die einzelnen Waren 2 individuell vermessen werden und gleichzeitig Einrichtungen des Kommissioniersystems 1 abgestimmt auf die Eigenschaften der Waren 2 betätigt werden können. Somit wird das Kommissioniersystem 1 nicht wie bei Kommissioniersystemen 1 des Standes der Technik häufig üblich entsprechend einem am ungünstigsten zu transportierenden Gegenstand betätigt, sondern kann jeweils eine optimale Geschwindigkeit erreicht werden.

## Patentansprüche

1. Verfahren zum Handhaben von Waren mit einem Handhabungssystem, insbesondere zum Kommissionieren von Waren (2) mit einem Kommissioniersystem (1), wobei Waren (2) aus einem Lager entnommen und auf einem Zielladungsträger positioniert werden, wobei die Waren (2) mit einem Roboter und/oder einem Fördersystem vom Lager auf den Zielladungsträger bewegt werden, **dadurch gekennzeichnet, dass** Eigenschaften der Waren (2), insbesondere eine Festigkeit, eine Steifigkeit, ein Gewicht, eine Oberflächenbeschaffenheit und/oder ein Schwerpunkt, erfasst werden und anhand von Daten eines Betriebes des Handhabungssystems, insbesondere Daten in Bezug auf Fehler bei Bewegungen der Waren (2), Randbedingungen bestimmt werden, bis zu welchen eine Funktion des Roboters und/oder des Fördersystems abhängig von Eigenschaften der Waren (2) gewährleistet ist, wonach ein Betrieb des Handhabungssystems abhängig von erfassten Eigenschaften der Waren (2) angepasst wird, insbesondere durch Anpassung von Kräften und/oder Beschleunigungen, welche durch den Roboter und/oder das Fördersystem auf die Waren (2) aufgebracht werden.

2. Verfahren nach Anspruch 1, **dadurch gekennzeichnet, dass** Eigenschaften der Waren (2) durch Aufbringung definierter Beschleunigungen mit dem Fördersystem und Erfassung von Verformungen und/oder Auslenkungen der Waren (2) erfasst werden.

3. Verfahren nach Anspruch 1 oder 2, **dadurch gekennzeichnet, dass** Randbedingungen von Einrichtungen des Handhabungssystems, welches insbesondere als Kommissioniersystem (1) ausgebildet ist, insbesondere Randbedingungen des Roboters und/oder des Fördersystems, bestimmt werden, indem Daten in Bezug auf zulässige Betriebsbedingungen und unzulässige Betriebsbedingungen aus fehlerfreien und fehlerbehafteten Bewegungen von Waren (2) vom Lager auf den Zielladungsträger ermittelt werden.

4. Verfahren nach einem der Ansprüche 1 bis 3, **dadurch gekennzeichnet, dass** die Waren (2) während einer Bewegung auf dem Fördersystem und/oder mit dem Roboter optisch, insbesondere mittels einer 3D-Kamera (5), einer Infrarotkamera und/oder einer UV-Kamera (5) erfasst werden, wobei insbesondere Verformungen der Waren (2) abhängig von Beschleunigungen der Waren (2) bestimmt werden.

5. Verfahren nach einem der Ansprüche 1 bis 4, **dadurch gekennzeichnet, dass** Eigenschaften der Waren (2) einem optischen Merkmal der Waren (2), insbesondere einem Barcode und/oder einer Verpackung der Waren (2) zugeordnet und in einer Datenbank gespeichert werden.

6. Verfahren nach einem der Ansprüche 1 bis 5, **dadurch gekennzeichnet, dass** mechanische Eigenschaften der Waren (2) an Positionen im Fördersystem erfasst werden, an welchen eine Geschwindigkeitsänderung der Waren (2) erfolgt, insbesondere an Positionen, an welchen die Waren (2) in einer ersten Richtung abgebremst und in einer zweiten Richtung beschleunigt werden, wobei die zweite Richtung etwa normal zur ersten Richtung ist.

7. Verfahren nach einem der Ansprüche 1 bis 6, **dadurch gekennzeichnet, dass** magnetische Eigenschaften der Waren (2) während einer Bewegung der Waren (2) vom Lager auf den Zielladungsträger erfasst werden.

8. Verfahren nach einem der Ansprüche 1 bis 7, **dadurch gekennzeichnet, dass** Eigenschaften der Waren (2), insbesondere Abmessungen, mit einem Radar erfasst werden, insbesondere während einer Bewegung der Waren (2) vom Lager auf den Zielladungsträger.

9. Verfahren nach einem der Ansprüche 1 bis 8, **dadurch gekennzeichnet, dass** Eigenschaften der Waren manuell unter Einsatz eines Fragenkataloges bestimmt werden.

10. Verfahren nach einem der Ansprüche 1 bis 9, **dadurch gekennzeichnet, dass** Eigenschaften der Waren bestimmt werden, welche ein Zusammenwirken der Waren mit anderen Waren betreffen.

11. Verfahren nach einem der Ansprüche 1 bis 10, **dadurch gekennzeichnet, dass** Eigenschaften der Waren (2) und ermittelte Randbedingungen, bis zu welchen eine Funktion des Roboters und/oder des Fördersystems abhängig von Eigenschaften der Waren (2) gewährleistet ist, in einer zentralen Datenbank gespeichert werden, welche mit mehreren Kommissioniersystemen (1) verbunden ist.

12. Verfahren nach einem der Ansprüche 1 bis 11, **dadurch gekennzeichnet, dass** ein Betrieb eines zweiten Handhabungssystems abhängig von im zweiten Handhabungssystem erfassten Eigenschaften der Waren (2) und in einem ersten Handhabungssystem erfassten Randbedingungen angepasst wird, insbesondere um eine Kommissionierleistung zu maximieren.

13. Handhabungssystem, insbesondere Kommissioniersystem (1), mit welchem Waren (2) von einem Lager auf einen Zielladungsträger bewegt werden können, mit einem Fördersystem und/oder einem Roboter, **dadurch gekennzeichnet, dass** das Handhabungssystem zur Erfassung von Eigenschaften der Waren (2) wie einer Festigkeit, einer Steifigkeit, einem Gewicht und dergleichen sowie zur Bestimmung von Randbedingungen, bis zu welchen eine Funktion des Roboters und/oder des Fördersystems abhängig von Eigenschaften der Waren (2) gewährleistet ist, eingerichtet ist, wobei das Handhabungssystem ferner dazu eingerichtet ist, abhängig von Eigenschaften der Waren (2) einen Betrieb des Handhabungssystems anzupassen, insbesondere durch Anpassung von Kräften und/oder Beschleunigungen, welche durch den Roboter und/oder das Fördersystem auf die Waren (2) aufgebracht werden, insbesondere zur Durchführung eines Verfahrens nach einem der Ansprüche 1 bis 12.

14. Handhabungsystem nach Anspruch 13, **dadurch gekennzeichnet, dass** eine Kamera (5), insbesondere eine 3D-Kamera (5), eine Infrarotkamera und/oder eine UV-Kamera (5) vorgesehen ist, mit welcher eine Bewegung der Waren (2) während einer Bewegung der Waren (2) auf dem Fördersystem erfassbar ist.

15. Handhabungsystem nach Anspruch 13 oder 14, **dadurch gekennzeichnet, dass** das Fördersystem eine Richtungsänderungseinrichtung, insbesondere einen Gurtumsetzer (4), aufweist, mit welchem eine definierte Beschleunigung auf die am Fördersystem transportierten Waren (2) in unterschiedlichen Richtungen aufbringbar ist, wobei vorzugsweise an der Richtungsänderungseinrichtung eine Kamera (5) zur Erfassung von Verformungen und/oder Auslenkungen der Waren (2) angeordnet ist.

16. Handhabungssystem nach einem der Ansprüche 13 bis 15, **dadurch gekennzeichnet, dass** ein Radar zur Erfassung von Abmessungen der Waren (2) vorgesehen ist.

17. Set, umfassend zumindest zwei Handhabungsysteme nach einem der Ansprüche 13 bis 16, wobei eine Datenverarbeitungseinrichtung vorgesehen ist, welche mit sämtlichen Handhabungsystemen verbunden ist, sodass ein Betrieb eines Handhabungsystems anhand von mit diesem Handhabungsystem erfassten Eigenschaften der Waren (2) und mit einem anderen Handhabungsystem erfassten Randbedingungen des Roboters und/oder des Fördersystems angepasst werden kann.
